# EUROPEAN PATENT APPLICATION

(11) **EP 3 904 720 A1**
(43) Date of publication of application: **03.11.2021**
(21) Application number: 20171868.1
(22) Date of filing: 28.04.2020
(51) Int. Cl.: F16F 1/38, B60R 21/203, B62D 7/22

(54) **A VIBRATION DAMPER ASSEMBLY, A METHOD OF TUNING SUCH AN ASSEMBLY, AND A METHOD FOR DYNAMIC VIBRATION DAMPING**

(71) Applicant: Vibracoustic Forsheda AB, 331 71 Forsheda (SE)
(72) Inventor: Johansson, Robin, 331 95 VÄRNAMO (SE); Hillblom, Kjell, 331 71 Forsheda (SE)
(74) Representative: AWA Sweden AB

(57) **Abstract**

A frequency-tuned vibration damper assembly (100) comprises a horn plate (20) connected to a vibrating surface (3) of a steering wheel structure at a first interface (11) via a plurality of first elastic damper elements (30) so as to be movable in relation to the vibrating surface (3). A mass (10) supported by the plate (20) is movable in relation to the plate (20) on an opposite front side of the plate (20). Elastic buffer elements (40) are provided at a second interface (12) between the plate (20) and the mass (10). The stiffness of the elastic buffer elements (40) is selected such that they form second elastic damper elements which together with the first elastic damper elements (30) and the mass (10) form a frequency-tuned dampened mass-spring system having two damping interfaces and being frequency-tuned to vibrations of said vibrating surface.

## Description

### TECHNICAL FIELD

The present disclosure generally relates to the field of dynamic frequency-tuned vibration dampers for motor vehicles. A dynamic frequency-tuned damper assembly for dampening vibrations in a steering wheel structure is disclosed. A method for frequency-tuning such vibration damper assemblies is also disclosed, as well as a method of dampening vibrations in a steering wheel structure. The disclosure also relates to the use of elastic buffer assembly elements in a frequency-tuned vibration damper assembly.

### BACKGROUND & SUMMARY OF INVENTION

A dynamic frequency-tuned vibration damper assembly may typically comprise at least one mass acting as a vibration body, and one or more elastic damper elements, wherein the mass is elastically connected to a vibrating surface via the elastic damper elements. The mass and the elastic elements together form a dampened spring-mass system, which is connectable to the vibrating surface.

The weight of the mass, and the stiffness, damping, design and numbers of the elastic damper elements constitute tuning parameters, and are selected or varied to provide a damping effect on the vibrating structure which can be expected to vibrate at one or more predetermined target frequencies. When the vibrating structure vibrates at a target frequency, the mass or vibration body is caused to oscillate/resonate at essentially the same frequency as the structure but out of phase, such that the vibrations of the structure is substantially dampened. In some applications, frequency-tuned dampers may be tuned to different frequencies in different spatial directions

The function of frequency-tuned vibration dampers, also termed tuned mass dampers, dynamic dampers or vibration absorbers, is based on a dampened spring-mass system which counteracts and reduces vibrations in a structure or surface to which the damper is connected by using one or more elastic damper elements for transferring vibrations from a vibrating structure to at least one mass which is caused to vibrate out of phase such as to dampen the vibrations. WO 01/92752 A1, WO 2013/167524 A1, and WO 2008/127157 A1 disclose examples of frequency-tuned vibration dampers.

In the automotive industry, some steering wheels are provided with frequency-tuned vibration damper assemblies for reducing steering wheel vibrations caused by vibrations from the road and from the engine being transferred to the steering wheel. In such damper structures, the weight of a gas generator, also termed inflator, may be used as at least a part of the weight of the mass in the spring-mass system of the damper assembly. Accordingly, such prior-art vibration dampers may be integrated with an airbag module of the steering wheel.

Also, steering wheels are generally provided with a horn activation mechanism by which a driver may activate a horn of the vehicle. A horn activation mechanism may comprise one or more springs, referred to as horn springs, for returning the horn activation mechanism to its normal state after a horn activation.

WO 2019/129512 A1 discloses an example of a vibration-reducing damper structures for a steering wheel, including an elastic damper element arranged on a slider which is slidably mounted on a bolt shaft. The overall damper assembly comprises a set of such damper structures, each comprising an elastic damper element. Vibrations in the steering wheel are transferred by one more such elastomeric damper element to an airbag assembly for dampening purposes. During horn activation, the slider may slide along the bolt shaft. A spring arranged on the bolt shaft is compressed upon horn activation for bringing the slider back to its normal position when the horn activation is terminated.

Drawbacks in the prior art include frequency-tuning challenges, especially challenges relating to reaching lower tuning frequencies. In general, frequency-tuning to lower vibration frequencies implies selecting a lower stiffness of the elastic damper elements supporting the mass. However, in certain applications and situations, selecting a lower elastic stiffness may in its turn lead to other problems. Especially in a so-called module damper, where the dynamic damper assembly as a major part of its mass uses the weight of an airbag module, selecting a lower stiffness may not be practically possible. If a too low stiffness is selected for the elastic damper elements, the mass supported thereby will "hang down" due to its weight, and assume an undesired and incorrect position. In addition, such an incorrect position of the airbag module may result in that inner structural components of the assembly becomes visible in an undesired manner.

In the light of the above, it is an object of the present inventive concept to address one or more of the above-mentioned disadvantages of the prior art.

According to a first aspect, there is provided a method of frequency-tuning a dynamic vibration damper assembly for dampening vibrations in a steering wheel structure,
wherein said vibration damper assembly comprises a mass, and a contact plate having a front side facing towards the mass and a rear side arranged to face towards a vibrating surface of the steering wheel structure, said contact plate being connectable to said vibrating surface via a plurality of first elastic elements so as to be movable in relation to the vibrating surface, and
wherein said mass is supported by the contact plate;
said method comprising frequency-tuning the damper assembly to varying vibration frequencies of the vibrating surface by both varying the stiffness of the first elastic elements and varying the stiffness of a plurality of second elastic elements, said second elastic elements being arranged between and in contact with the plate and the mass so as to be elastically deformable in response to the mass moving in relation to the contact plate during a damping operation of the damper assembly.

According to a second aspect, there is provided a frequency-tuned damper assembly for dampening vibrations in a steering wheel structure, said assembly comprising:
a plurality of first elastic elements;
a contact plate which is connectable to a vibrating surface of the steering wheel structure via the first elastic elements so as to be movable in relation to the vibrating surface;
a mass which is supported by the contact plate so as to be movable in relation to the contact plate; and
a plurality of second elastic elements each of which is arranged between and in contact with the contact plate and the mass so as to be elastically deformable in response to the mass moving in relation to the contact plate during a damping operation of the damper assembly,
wherein the mass and said first and second elastic damper elements are configured to operate in common, during a damping operation of the damper assembly, as a frequency-tuned dampened spring-mass system being frequency-tuned to vibrations of the vibrating surface.

According to a third aspect, there is provided a method of dampening vibrations in a steering wheel structure, said method comprising:
connecting a contact plate to a vibrating surface of a steering wheel structure via a plurality of first elastic elements so as to allow the contact plate to move in relation to the vibrating surface;
connecting a mass to the contact plate so as to allow the mass to move in relation to the contact plate;
arranging a plurality of second elastic elements between and in contact with the contact plate and the mass so as to be elastically deformable in response to the mass moving in relation to the contact plate during a damping operation; and
configuring the first and second elastic elements to form, together with the mass, a dampened spring-mass system being frequency-tuned to vibrations of the vibrating surface.

According to a fourth aspect, there is provided a use of elastic buffer elements in a frequency-tuned vibration damper assembly,
said damper assembly comprising a plate which is connected to a vibrating surface of a steering wheel structure via a plurality of first elastic damper elements so as to be movable in relation to the vibrating surface, a mass which is supported by the plate so as to be movable in relation to the plate on an opposite front side of the plate; and elastic buffer elements provided between the plate and the mass,
as second elastic damper elements which together with the first elastic damper elements and the mass form a frequency-tuned dampened mass-spring system being frequency-tuned to vibrations of said vibrating surface.

In preferred embodiments, the mass may comprise an airbag module. An airbag module may typically include a gas generator representing a substantial weight thereof. Using the existing weight of an airbag module in a steering wheel structure as at least part of the mass in the spring-mass system makes it possible to reduce the weight increase when designing the damper assembly. The weight of other components, such as the weight of the contact plate, may also form part of the total mass in the frequency-tuned spring-mass system.

A common feature of the inventive concept is that the overall dynamic damping operation, during which an elastically suspended mass is arranged to vibrate out of phase in relation to unwanted vibrations, makes use of not only one single set of elastic damper elements as in the prior art, but of two separate sets of elastic elements, operating in two different "interfaces" in the damper assembly but still operating together in the overall damping operation. The first interface is between the contact plate and the vibrating structure to which the damper assembly is connectable. The second interface is between the contact plate and the mass. The set of first elastic damper elements are arranged to operate in the first interface as part of the overall dampened spring-mass system. The set of second elastic damper elements are arranged to operate in the second interface, also as part of the overall dampened spring-mass system. The first and second set of elastic elements are configured to form, together with the mass, a frequency-tuned spring-mass system, being frequency tuned to vibrations of the vibrating structure. One may consider the inventive spring-mass system as a coupled or series-coupled dynamic spring-mass system comprising two interacting or co-operating sets of elastomeric elements which are configured to form, together with the mass, a complete overall frequency-tuned damping system. In many cases, this allows the damper assembly to be frequency tuned such that the mass will perform the aimed-at out-of-phase movement during a damping operation. Generally, the action of "configuring" the elastic elements comprises selecting/tuning/varying the stiffness of the elastic elements.

An advantage obtained by the inventive concept is that it makes it possible to a design vibration damper assembly which can be frequency-tuned to lower frequencies, compared to a conventional damper solution relying on a single set of elastic damper elements operating at a single interface between the contact plate and the vibrating surface. By using, in addition to the set of first elastic elements, a set of second elastic elements, arranged at a second interface between the contact plate and the mass, and by configuring and selecting the stiffness of the first and the second elastic elements so that they all actively takes part in the overall dynamic damping operation, it becomes possible to tune the overall spring-mass system to lower frequencies without having to reduce the stiffness of the first elastic elements. This, in its turn, is an advantage since lowering the stiffness of the first elastic elements may result in unwanted misalignment of the various parts in the assembly due to the weight. The first elastic elements may be arranged not only to have a frequency damping function, but also to have the function of positioning the contact plate in relation to the steering wheel structure. If a too low stiffness is selected for the first elastic elements, this may result in that the contact plate with the mass mounted thereon may "hang down" to an unwanted default position due to the total weight, optionally allowing the driver to see - in an unwanted manner - inner structural components of the assembly. The damping operation may also be negatively affected by such a misalignment of the components. The present inventive concept makes it possible to avoid this unwanted compromise between, on the one hand, selecting a lower stiffness to reach lower tuning frequencies but with potential misalignment consequences, and, on the other hand, selecting a higher stiffness to avoid misalignment but with the drawback of not reaching aimed-at lower tuning frequencies.

The mass (e.g. the airbag module) may be supported by the contact plate so as to be movable in a linear and/or rotational direction in relation to the contact plate during a damping operation of the damper assembly.

In some embodiments, the mass is arranged to perform at least a linear movement in relation to the contact plate during a damping operation of the damper assembly, wherein the second elastic elements are arranged to undergo a shear deformation in response to said linear movement. Such a linear movement may be in a plane essentially parallel to the contact plate and essentially perpendicular to the main axis of the steering column, e.g. in a vertical direction and/or in a horizontal direction. In certain cases, the damper assembly is designed to dampen different frequencies in different directions.

In some embodiments, the mass is arranged to perform at least a rotational movement in relation to the contact plate during a damping operation of the damper assembly, wherein the second elastic elements are arranged to undergo an alternating compression/decompression elastic deformation in response to said rotational movement. In certain cases, the mass be subject to both a linear movement and a rotational movement in combination in relation to the contact plate during a damping operation.

The configuration of the two sets of elastic elements may typically comprise varying or selecting a stiffness of both the first elastic elements and a stiffness of the second elastic elements, in order to obtain an aimed-at tuned frequency for the dampening system. This process of configuration may also be considered as a tuning operation. The stiffness of the first and second elastic elements may be varied in various ways, and these ways may be combined. In some embodiments, the stiffness may be varied by varying at least a shear stiffness in each or some of the first and/or elastic elements. In some embodiments, the stiffness may be varied by varying at least a material hardness. In some embodiments, the stiffness may be varied by changing the physical design and/or dimensions of the elastic elements. Varying the stiffness may relate to a variation of the stiffness of the individual elements, but also a variation of the stiffness of the plurality of elements as a group, for instance by varying the number of elastic elements in a set. In a design process, for frequency-tuning the overall damping assembly to the expected vibrations of the steering wheel structure, the stiffness of the first elastic elements may - as an example only - be selected first to obtain a first "main" frequency level or interval, while the stiffness of the second elastic elements thereafter may be selected to fine tune the assembly in smaller steps.

The first elastic elements and the second elastic elements may differ from each other in one or many ways, for instance regarding structure, design, material, stiffness, dimensions, mounting, function, operation mode, number, etc.

In some embodiments, the system configuration may be such that, during a damping operation, the movement of the contact plate in relation to the vibrating structure is larger than the movement of the mass in relation to the contact plate. In other embodiments, the situation may be the opposite.

In some embodiments, the plurality of second elastic elements may comprise solid or homogeneous bodies of an elastomeric material, whereas the plurality of first elastic elements may comprise more structurally designed elements, such as cylinder shaped or sleeve shaped elements.

In some embodiments, the mass is connected to the contact plate via one or more connector elements which do not form part of the second elastic elements. In such embodiments, the second elastic elements may be arranged between the contact plate and the mass without mechanically supporting the mass on the contact plate. In some embodiments, all of or at least some of the second elastic elements are mechanically connected to only one of the contact plate and the mass, and are in frictional engagement only with the other one of the contact plate and the mass. The engagements on either side ensures that that the second elastic elements will perform an elastic deformation in response to the movement of the mass in relation to the contact plate during a damping operation. In alternative embodiments, the second elastic elements may also act as connector elements, mechanically connected to both the mass and the contact plate.

In some embodiments, the number of first elastic elements may be different from or the same as the number of second elastic elements. Typically, the number of first elastic elements may be 3 to 4 in order to position the contact plate correctly in relation to the steering wheel structure. As an example, the number of second elastic elements may be 4.

The actual position of the first and second elastic elements in relation to the contact plate may differ in different embodiments. In some embodiments, the contact plate may be provided with mounting openings for receiving the first elastic elements. In such embodiments, the first elastic elements may be located at least in part on a rear side of the contact plate facing the vibrating surface. In some embodiments, the second elastic elements may be located at least in part on a front side of the contact plate facing the mass.

The position of the mass in relation to the contact plate may also differ in various embodiments. In some embodiments, the mass may be located in its entirety on a front side of the contact plate, with the second elastic elements being arranged at least in part between and in contact with the mass and the contact plate. In alternative embodiments, the contact plate may have a central opening for receiving part of the mass, optionally extending partly to the rear side of the contact plate.

In some embodiments, the plurality of second elastic elements may comprise elastic assembly buffers which are arranged to maintain a distance between the mass and the contact plate during the assembly process. Such buffers may be attached to and supported by the contact plate before assembly. When the mass is mounted and connected to the contact plate by one or more separate contact elements, a front part of the assembly buffers may be brought into frictional engagement contact with the mass, optionally an indirect engagement. During assembly, the assembly buffers may also be slightly elastically compressed so as to be mounted in a biased state between the mass and the contact plate. Such assembly buffers may advantageously take up tolerances and avoid any unwanted direct contact between the mass and the contact plate. In such embodiments, in accordance with the inventive concept the stiffness of the second elastic elements are selected such that the second elastic elements may operate both as active damper elements forming active part of the overall frequency-tuned spring-mass system, and as static assembly buffers when no vibrations are present.

In embodiments where the second elastic elements have the dual function of acting as dynamic damping elements and as assembly buffers, it may be advantageous to substantially lower the stiffness of the second elastic elements compared to a situation where only the buffer function is needed. As a non-limiting example, a relatively high hardness of 80 Shore A may be selected for obtaining a static assembly buffer operation only, whereas a relatively lower hardness of for instance 60 Shore A or lower, or optionally 40 Shore A or lower, may be selected for obtaining both the dynamic frequency-tuned damping function together with the mass and the first elastic elements, and the assembly buffer function.

The above and other features and advantages of the inventive concept are set out in the claims and further described in the detailed description of a preferred embodiment.

### Terminology

In the present disclosure, the action of "varying the stiffness" of a plurality of elastic elements is to be interpreted as tuning or adapting the elastic stiffness of the group of elastic elements such that the elastic elements are configured to actively participate in and contribute to the dynamic vibration damping. With respect to the second elastic damping elements, the action of "varying the stiffness" would typically mean selecting a stiffness which is low enough for the second elastic elements to operate together with the first elastic elements to perform an overall dynamic damping operation.

In the present disclosure, a "contact plate" (sometimes also referred to as a "horn plate" in the technological field) is to be interpreted as a plate shaped element, optionally a multi-part element, forming part of a horn activation mechanism in a steering wheel structure, said contact plate being movable in one direction in response to a driver-initiated horn activation, and being biased in the opposite direction by a horn spring mechanism for returning the contact plate to a default position after horn activation.

### BRIEF DESCRIPTION OF THE DRAWINGS

The inventive concept, some non-limiting preferred embodiments, and further advantages of the inventive concept will now be described with reference to the drawings in which:
- Fig 1: illustrates a steering wheel of a vehicle.
- Fig. 2: is an exploded front view of an embodiment of a vibration-reducing damper assembly.
- Fig. 3: is an exploded rear view of the damper assembly in Fig. 2.
- Fig. 4: illustrates an airbag module being mounted.
- Fig. 5: illustrates a damper assembly mounted on a steering wheel structure.
- Figs 6A and 6B: are sectional views in larger scale illustrating the mounting of the airbag module shown Figs 4 and 5.
- Fig. 6C: illustrates airbag module movements.
- Fig. 7A and 7B: illustrate second elastic elements.

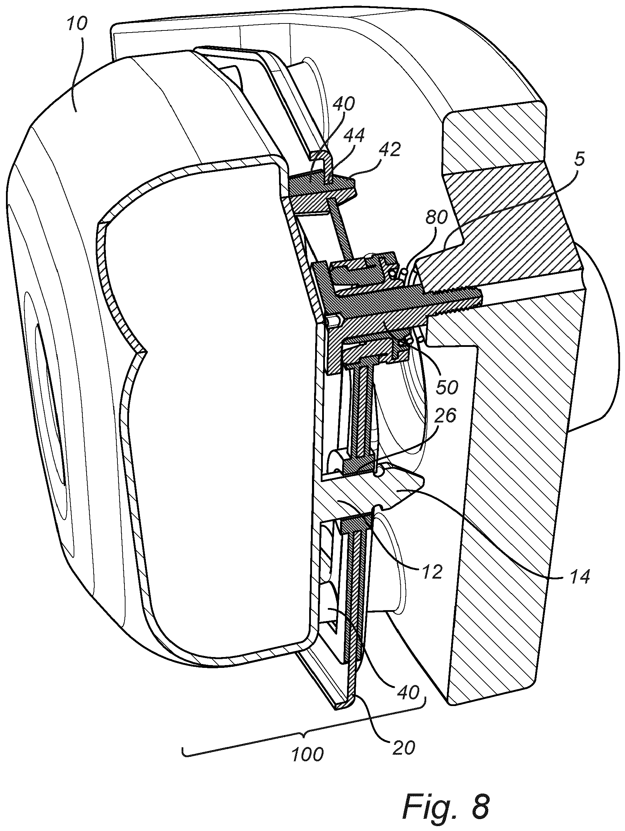

- Fig. 8: shows a damper assembly partly in section.
- Fig. 9: is a sectional view of a main damper unit.
- Figs 10A to 10C: illustrate contact plate movements at a first interface.
- Figs 11A and 11B: illustrate airbag module linear movements at a second interface.
- Fig. 12A and 12B: illustrate airbag module rotational movements at a second interface.
- Fig. 13: is a schematic illustration of the inventive concept.
- Figs 14A to 14C: shows an alternative embodiment of a second elastic element.
- Fig. 15: shows an alternative embodiment of a first elastic element.
- Fig. 16: shows another alternative embodiment of a first elastic element.

### DETAILED DESCRIPTION OF PREFERRED EMBODIMENTS

The present inventive concept relates in general to the field of frequency-tuned vibration dampers, also referred to as dynamic dampers. Such dampers may be used to dampen vibrations in a vibrating surface or structure, such as a vibrating component like a steering wheel or steering wheel structure of a motor vehicle. A dynamic vibration damper comprises at least one mass acting as a vibration body, and at least one elastic damper element. The at least one mass and the least one elastic damper element together provide a dampened spring-mass system, and may be connected to the vibrating structure.

The weight of the mass, and the stiffness and damping of the elastic damping element are selected to provide a damping effect on the vibrating structure, which can be expected to vibrate at one or more predetermined target frequencies. When the vibrating structure vibrates at a target frequency, the mass is preferably caused to oscillate/resonate at the essentially same frequency as the structure but out of phase, such that the vibration of the structure is substantially dampened. The mass may vibrate with an amplitude substantially greater than the vibration amplitude of the vibrating structure.

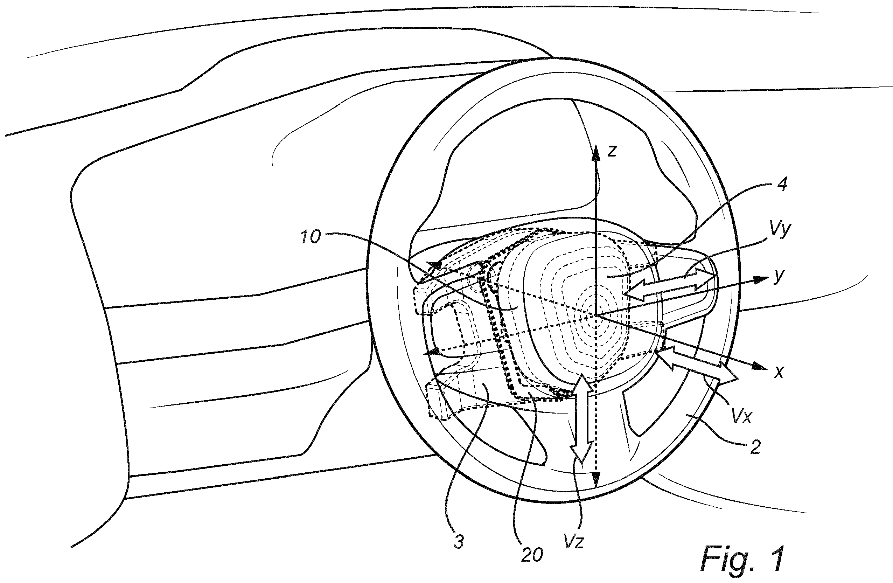

Fig. 1 illustrates a steering wheel 2 in a motor vehicle provided with a frequency damper assembly 100 according to an embodiment of the inventive concept. Throughout the present disclosure, a Cartesian coordinate system is used as follows: the x axis is co-axial with the steering column. The y axis and the z axis correspond essentially to the horizontal direction and the vertical direction, respectively. The coordinate system is fixed to the steering wheel and to the damper assembly, meaning that the orientations of the y axis and the z axis may change when the driver turns the steering wheel. Radial and circumferential directions are in relation to the x axis.

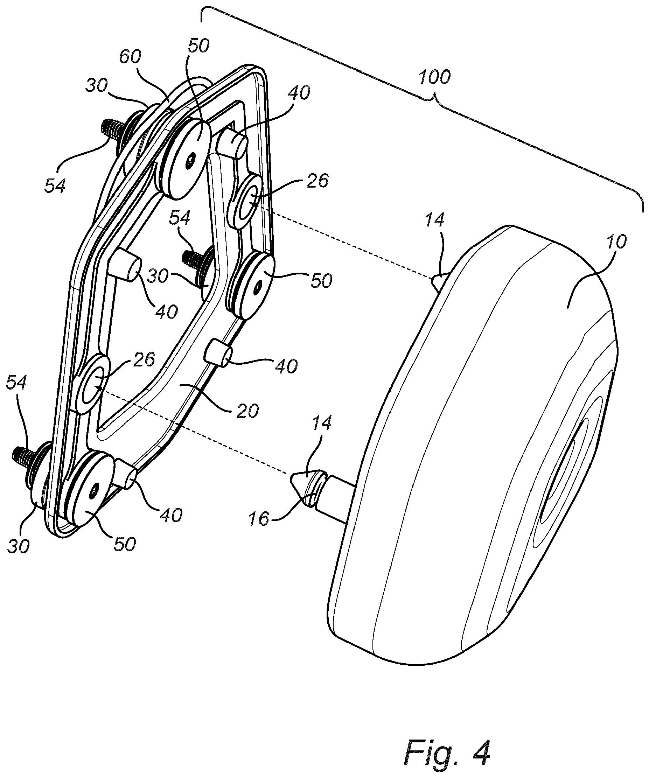

Vibrations from the road and the engine may be transferred to the steering wheel 2. These steering wheel vibrations may be perpendicular to the steering column, as indicated by arrows Vy and Vz in Fig. 1. In some instances, there may also be vibrations along the x axis as indicated by arrow Vx. The steering wheel 2 is provided with a vibration-reducing damper assembly 100 (Fig. 4) configured to dynamically dampen at least some of the steering wheel vibrations. Especially, the components of the damper assembly 100 are selected such as to frequency-tune the damper assembly 100 to one or more of the "problem vibrations" to be dampened.

As known in the art, the steering wheel 2 is also provided with a horn activation mechanism for activating a horn (not shown) of the vehicle. To this end, a horn activation pad 4 is arranged at the center of the steering wheel 2 to be pressed by the driver upon horn activation. The damper assembly is located behind the horn activation pad 4. When the driver presses the horn activation pad 4, an electrical switch is closed to activate the horn. The switch (not shown) may for instance be in the form of one or more metallic rivets which are supported by the armature 3 and which are brought into electrical contact with the horn plate 20 upon horn activation. When the driver releases the horn activation pad 4, the horn activation mechanism returns to its non-activated or initial state by means of one or more horn springs.

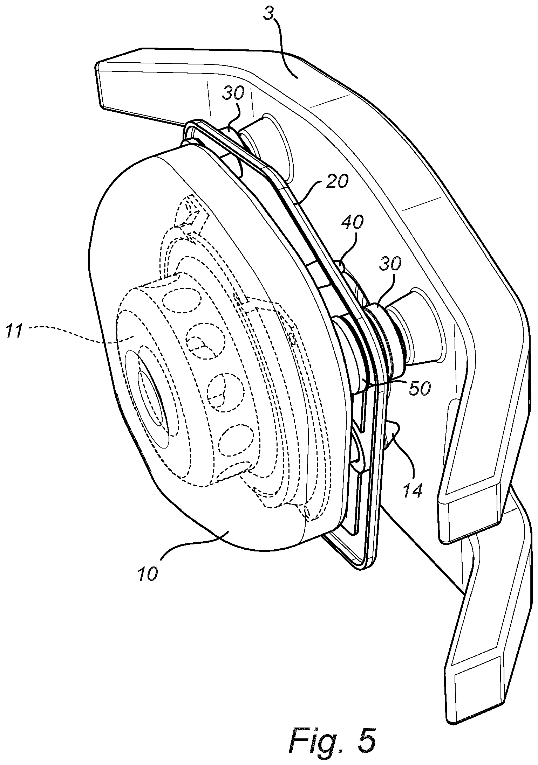

An airbag module 10 arranged at the center of the steering wheel 2 typically includes at least an inflatable airbag and a gas generator 11 (Fig. 5). In the present embodiment, the weight of the airbag module 10, especially the weight of the gas generator 11, is used as at least part of the total weight of the mass of the frequency-tuned spring-mass system. Thereby, the use of separate deadweights for this purpose may be avoided or substantially reduced.

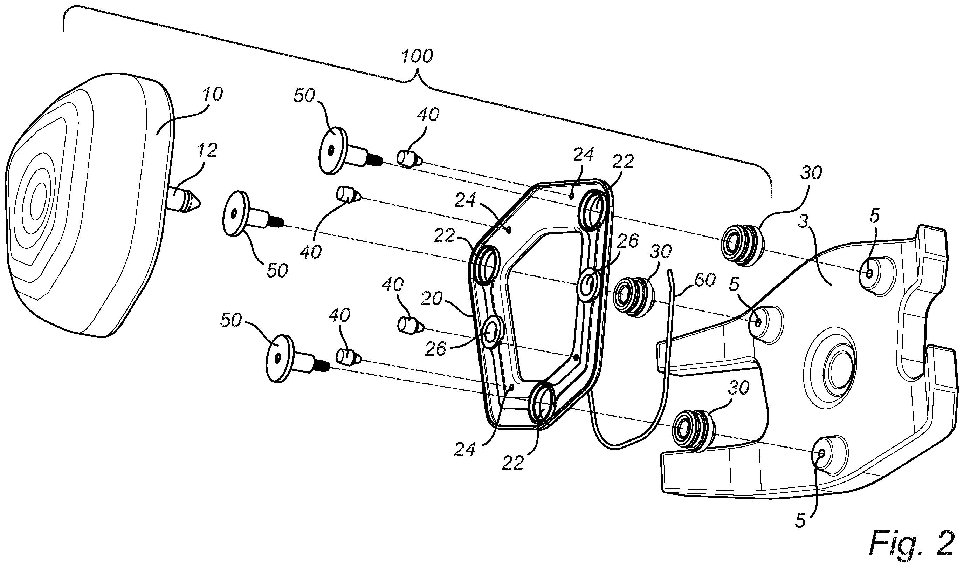

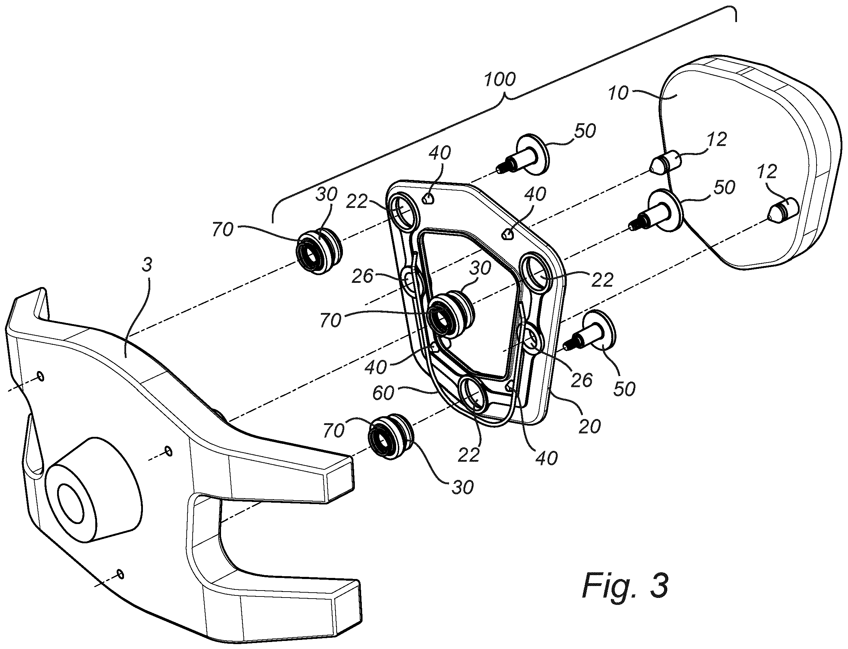

Figs 2 and 3 are exploded views illustrating various components of a dynamic vibration-reducing damper assembly 100, and the assembly thereof on an armature 3 of the steering wheel structure as indicated by dashed lines. The main parts of the overall damper assembly 100 include the airbag module 10 (forming at least part of the mass in the dampened the spring-mass system), a contact plate 20 (sometimes also referred to a horn plate in the art), a plurality of first elastic elements 30, and a plurality of second elastic elements 40. The damper assembly 100 is arranged on and supported by a base structure or armature 3 to which the steering wheel 2 is fixedly connected. The vibrations in the steering wheel 2 are thus present in the armature 3 also. Accordingly, in this embodiment the surface of the armature 3 facing the damper assembly 100 constitutes a vibrating surface the vibrations of which are to be dampened.

The contact plate 20 may be made of metal or any other rigid material. It may extend parallel to the yz plane. It may be provided with a plastic cover (not shown) made of a relatively rigid plastic material molded on the horn plate 20, including a top cover and a bottom cover. The contact plate is provided with a plurality of openings 22, each arranged to receive an associated one of the first elastic damper elements 30 as will be described below. In the illustrated embodiment, a cylindrical sleeve is arranged around each opening 22 in the contact plate 14 and extends above the front side of the contact plate 14. The sleeves may by molded in one piece with the plastic cover, thus being rigidly connected to the horn plate 20. In other embodiments, the sleeves may be dispensed with. The contact plate 20 is further provided with a plurality of smaller openings 24, each arranged to receive part of an associated one of the second elastic damper elements 40 as will be described further below. The contact plate 20 is further provided with two openings 26 which are arranged at a mutual distance from each other along the horizontal z axis and each of which is arranged to receive an associated mounting element 12 attached to and projecting from the rear side of the airbag module 10. Figs 2 and 3 further show three bolts 50 each of which is arranged to be inserted through an associated one of the openings 22 and through an associated one of the first damper elements 30, and to be fixedly secured to mounting studs 5 of the armature 3. Finally, Figs 2 and 3 show a locking spring 60 for engaging the mounting elements 12 of the airbag module 10. The locking spring 60 is mounted in a biased state. The first and second elastic elements 30, 40 may be manufactured from any suitable elastomeric material, such as silicone rubber.

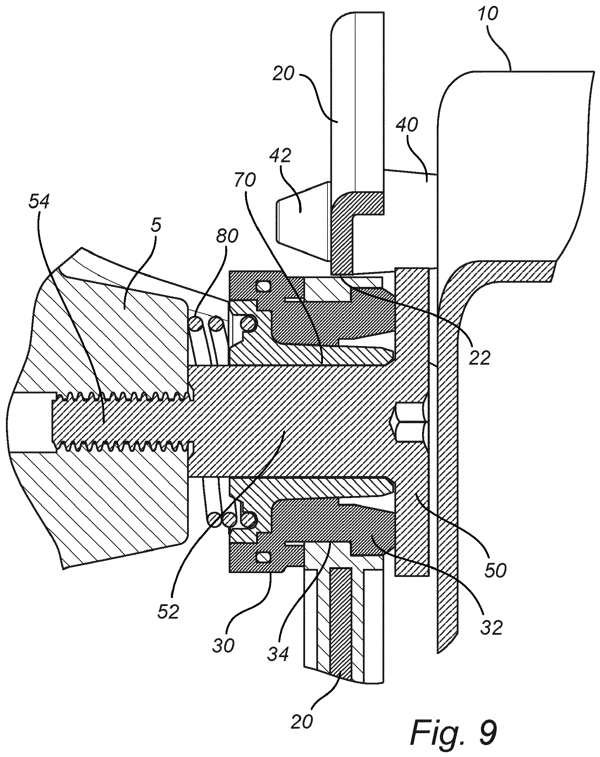

As shown in enlarged scale in Fig. 9, each elastic damper element 30 is arranged around a tubular slider 70. In the final assembly, the tubular slider 70 is arranged to slide along a shaft 52 of the bolt 50 upon horn activation. The slider 70 may typically be manufactured from a more rigid material. In the illustrated embodiment, the elastic element 30 and the slider 70 may be pre-manufactured as one unitary damper unit, referred to as a "primary damper unit" in the following. The elastic element 30 may be molded directly on the slider 70. This may be done by a 2K injection molding where the slider 70 and the elastomeric component 30 are manufactured using one single 2K injection molding machine. The elastic element 30 may also be further bonded to the slider 70, such as mechanical and/or chemical bonded.

In the assembly process as shown in Fig. 3, each primary damper unit 30+70 is inserted from the rear side through an associated opening 22 in the contact plate 20. Fig. 9 shows the primary damper unit in its mounted position. During the insertion, a radially enlarged portion 34 of elastic element 30 is radially deformed in order to pass through the opening 22, and then radially expanded to lock the elastic element 30 in place. A center portion of the elastic element 30 forms an engagement surface 34 engaging the rim of the opening 20. This forms the interface through which vibrations from the armature 3 are transferred. A rear end of the elastic element 30 is in engagement with a horn spring 80 biased between the primary damper unit and the armature 3.

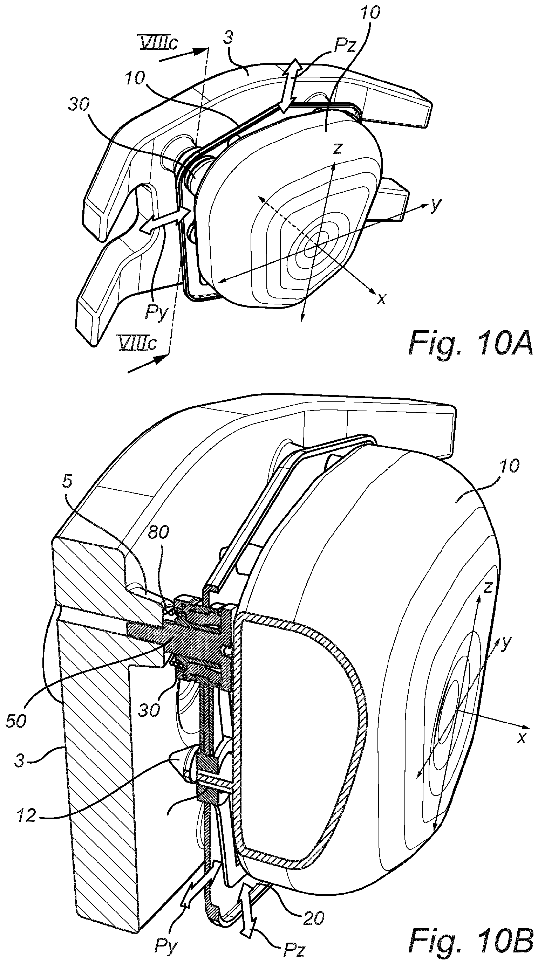

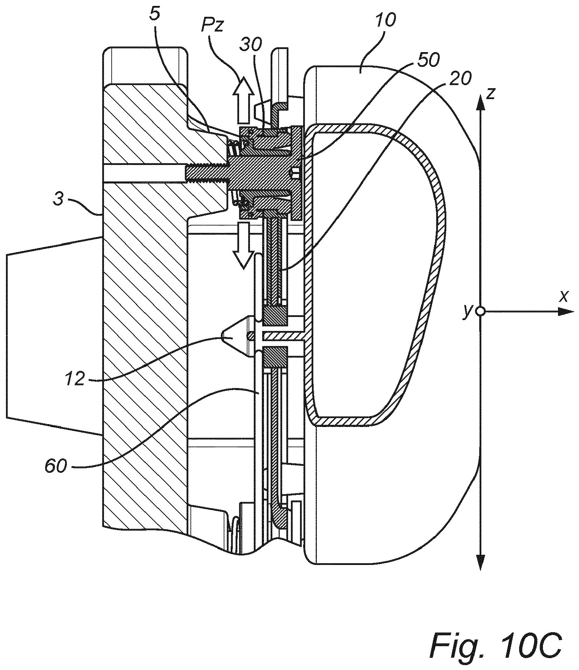

Subsequently in the assembly process, a shaft 52 of each bolt 50 is inserted through an associated opening 22 in the contact plate 20 and through an associated primary unit 30, 70. A threaded bolt end 54 is fixedly secured to a mounting stud 5 of the armature 3. Thereby, the contact plate 20 is elastically suspended on the armature 3 via the primary damper units. During a dynamic damping operation, the contact plate 20 is allowed to perform vibration movements in relation to the armature 3 as illustrated with arrows Py and Pz in Figs 10A to 10C. In some embodiments, vibrations may also take place in the x direction.

During the final fastening of each bolt 50, a pre-compression of the corresponding horn spring 80 is obtained. As a non-limiting example, the horn spring 80 may be pre-compressed from 10 mm to 7 mm during assembly and then further compressed one or a few mm upon horn activation.

In the final assembled state, the bolt head may be in axially engagement with the insertion end 32 of the elastic element 30, optionally with a slight axial elastic compression to lock the end 32 in place. During the final fastening of each bolt 50, the bolt head may engage and axially compress the elastic element 30 until the insertion end thereof is in level with the distal end of the slider 70. This optional final compression will lock the snap-lock protrusions 32 tighter and thereby fix the damper unit even more securely in relation to the contact plate 20.

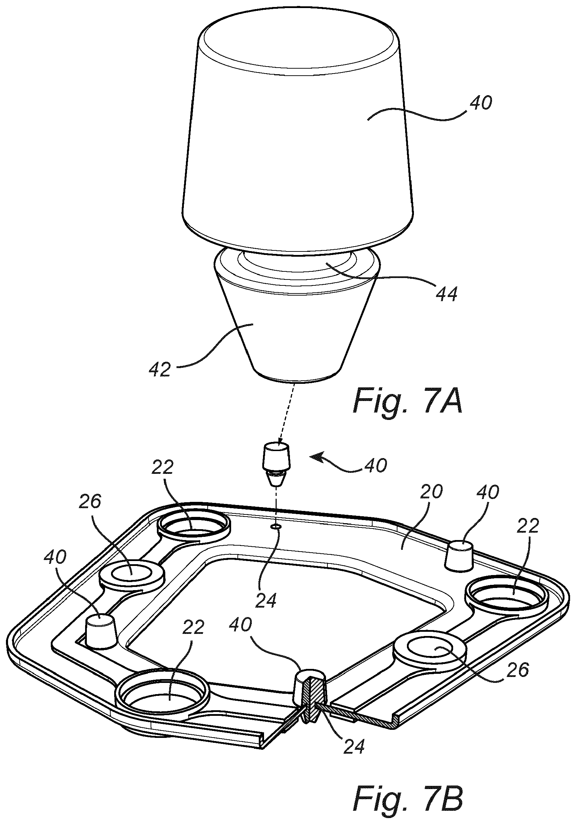

Fig. 7B illustrates the pre-assembly of the second elastic elements 40 on the front side of the contact plate 20. As will be described more in detail below, the second elastic elements 40 may have the dual function of acting both as active dynamic damper elements in the dynamic damper operation of the overall damper assembly 100, and as acting as static assembly buffers. In the present embodiments, there are four second elastic elements 40 arranged essentially in a square configuration on the contact plate 20. Other numbers and other configurations are possible. Each second elastic element 40 comprises a main part, an insertion part 42 and a mounting groove 44 located therebetween. In the illustrated embodiment, the main part is slightly frusto-conical, while the insertion part 42 is also frusto-conical but with a more pronounced cone angle. In the pre-assembly process, the insertion part 42 of each second elastic element 40 is pulled or pushed through the associated mounting opening 24 in the contact plate 20 until the rim of the opening 24 engages the mounting groove 44 to hold the element 40 in place.

In the illustrated embodiment, the second elastic elements 40 are manufactured as solid or homogenous bodies, in contrast to the first elastic elements 30 which are more sleeve shaped. The material may be silicone rubber or any other suitable elastomeric material presenting the required stiffness.

Following the above described attachment of the contact plate 20 to the armature 3 via the primary damper units 30,70, and the above described pre-assembly of the second elastic elements 40 to the contact plate 20, the airbag module 10 may mounted on the contact plate 20. Fig. 4 illustrates with dashed lines how the two rod-shaped mounting elements 12 of the airbag module 10 are aligned with the openings 26 in the contact plate 20. The airbag module 10 is moved towards the contact plate 20 until the conical insertion ends 14 of the mounting elements 12 are inserted through the openings 26. The final position of the airbag module 10 is shown in Fig. 5.

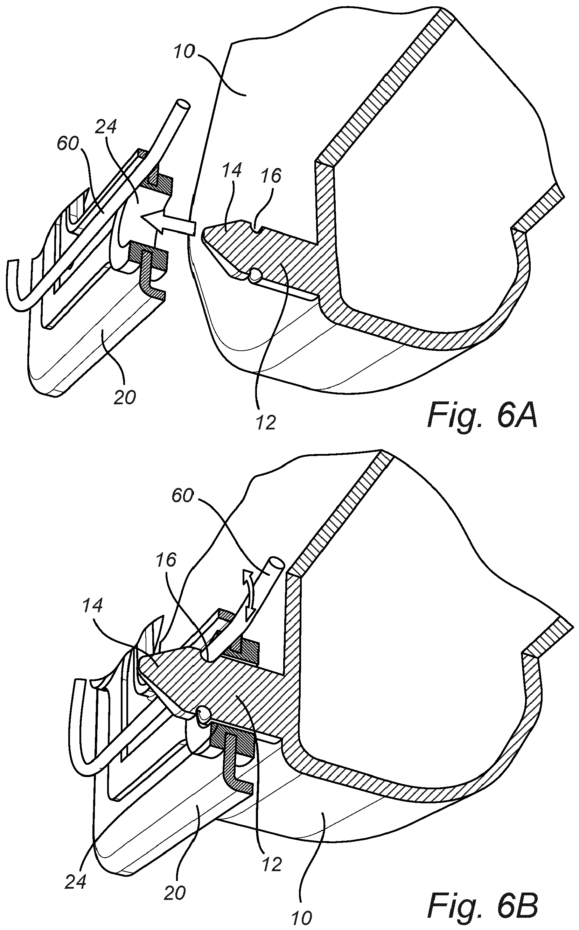

Figs 6A and 6B illustrate a mechanism for preventing the airbag module 20 from being disengaged from the contact plate 20. Other designs are possible. In this embodiment, the engagement is accomplished by means of the locking spring 60 and engagement grooves 16 formed in the mounting elements 12. The locking spring 60 is mounted in a biased state. When the tip 14 of the mounting element 12 is inserted through the opening 24 as shown in Fig. 6A, the angled part will flex the locking spring 60 sideways until the locking spring 60 snaps back into the engagement groove 16 as shown in Fig. 6B. In this position, the airbag module 10 is prevented from being disengaged from the contact plate 20. However, as will be discussed below, the airbag module 10 is still able to move slightly in relation to the contact plate 20.

According to the inventive concept, the second elastic elements 40 are in engagement with both the contact plate 20 and the mass 10. In the illustrated embodiment, the engagement between the second elastic elements 40 and the mass 10 is accomplished by frictional forces only. The second elastic elements 40 are dimensioned such that they will be slightly compressed during the final mounting of the airbag module 10 as described above, in order to accomplish a frictional engagement between the elements 40 and the airbag module 10. During this assembly of the airbag module 10 on the contact plate 20, the second elastic elements 40 may act as assembly buffers, with the function of taking up manufacturing tolerances and the function of preventing direct contact between the main part of the airbag module 10 and the contact plate 20.

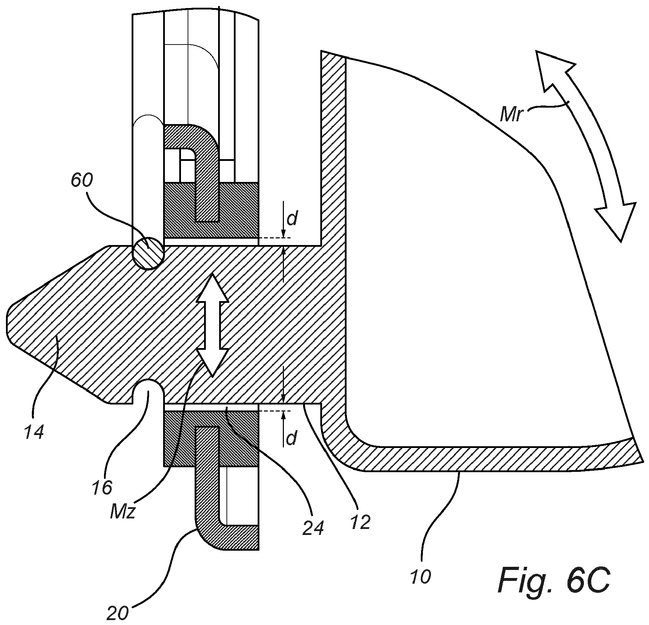

According to the inventive concept, the structure is such that the airbag module 10 is able to perform various movements in relation to the contact plate during a dynamic dampening operation. The possible movements may differ between different embodiments. Fig. 6C illustrates some primary movements.

A first movement is a linear or translation movement as illustrated by arrow Mz. In the illustrated example, the airbag module 10 (i.e. the major part of the mass of the dampened spring-mass system) is able to perform a linear movement in the vertical z direction in relation to the contact plate 20. This linear movement is made possible by a small radial annular play d between the mounting element 12 and the rim of the opening 24. The elastic spring property of the locking spring 60 will allow this movement while maintaining engagement with the mounting element 12. Linear movements in the y direction and/or in the x direction may also be possible in some embodiments.

A second movement is a rotational movement as illustrated with arrow Mr in Fig. 6C. In the illustrated example, the airbag module 10 is able to perform a rotational movement Mr in relation to the contact plate 20 during the damping operation. In this example, the rotational axis would be essentially determined by the points of engagement with the locking spring 60, i.e. a rotation in relation to a horizontal axis where the mass 10 moves slightly up and down during a damping operation.

The overall dynamic damping operation according to the inventive concept will now be discussed more in detail with reference especially to Figs 10A to 10C, Figs 11A and 11B, Figs 12A and 12B, and Fig. 13.

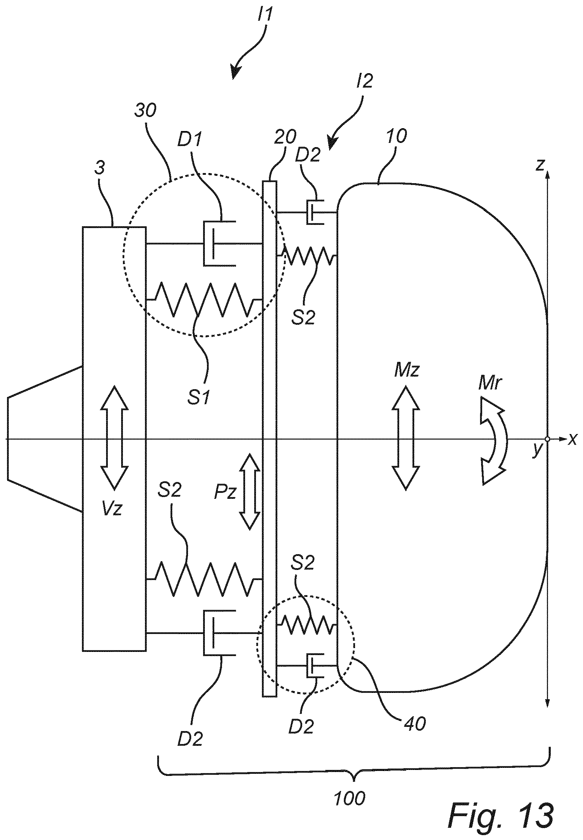

Fig. 13 is a schematic illustration, not to scale, for explaining the inventive concept. Reference numerals I1 and I2 designate a first interface and a second interface, respectively. The first interface I1 is between contact plate 20 and the armature 3 presenting the "problem vibrations" Vy and/or Vz. The second interface I2 is between the contact plate 20 and the mass 10, here represented by the airbag module 10. The first elastic elements 30 are arranged at the first interface 11, and the second elastic elements 40 are arranged at the second interface 12.

As illustrated by a dashed circles 30 and 40 in Fig. 13, each first elastic damper element 30 has a spring property S1 and a damping property D1, and each second elastic damper 40 element has a spring property S2 and a damping property D2. The spring properties S1 and S2 may differ from each other, and the damping properties D1 and D2 may differ from each other.

The mass of the airbag module 10, the stiffness of the first elastic elements 30, and the stiffness of the second elastic elements 40 are configured such that the mass, the first elastic elements 30 and the second elastic elements 40 operate in common, during a dynamic damping operation of the damper assembly, as a frequency-tuned dampened spring-mass system being frequency-tuned to vibrations Vy of the vibrating surface or structure 3. In other words, the configuration is such that during a damping operation, there damper assembly 100 will present damping vibration movements at both interfaces I1 and I2. The contact plate 20 will be subject to vibration movements (e.g. Pz) in relation to the armature 3, and the mass 120 will be subject to vibration movements (e.g. Mz and/or Mr) in relation to the contact plate 20. The weight of the contact plate 20 and other minor parts may also be considered as part of the mass of the overall damper system.

According to the inventive concept, the overall damping operation thus includes not only damping operation at one interface as in the prior art, but at two different interfaces I1 and 12, by means of two different sets of elastic elements the stiffnesses of which are selected such that both sets together, and with the mass, forms an overall "coupled" dampened spring-mass system being frequency tuned to the vibrations to be dampened.

In the design process, the stiffnesses of the elastic elements 30 and 40 are varied/tuned in response to expected frequencies of the vibrations to be dampened. The weight of the airbag module 10 will also have to be considered. The design parameters will typically be selected such that the airbag module 10 (i.e. the mass) is caused to vibrate with the problem frequency of the vibration (e.g. Vz), but out of phase. During this movement, there will be not only relative damping movements in the first interface 11, but also in the second interface I2 due to selecting an appropriate stiffness for the second elastic elements 40.

Arrows Py and Pz in Fig. 10A designate possible linear damping movements, in the first interface 11, of the contact plate 20 in relation to the armature 3. During such movement, the first elastic elements 30 will be subject to an elastic deformation as is per se known in the art. In this embodiment, the elastic deformation will include a radial compression/decompression of the center part 34 of the elastic element 30. In some embodiments, there may be damping movements in the x direction also in the first interface 11.

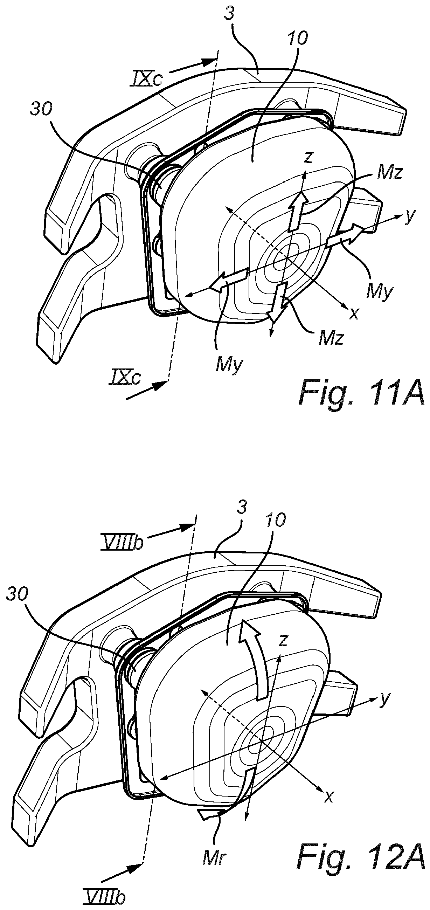

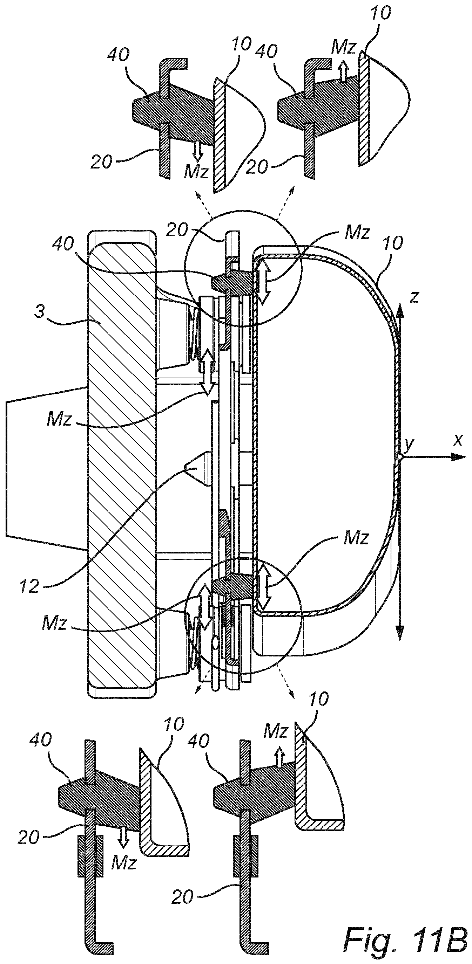

Arrows My and Mz in Fig. 11A designate possible linear damping movements, at the second interface 12, of the airbag module 10 in relation to the contact plate 20. During such linear/translation movement, the second elastic elements 40 will be subject to an elastic deformation. As illustrated in larger scale in Fig. 11B, such elastic deformation will be essentially a shear deformation of the elements 40 when the mass 10 is moving in the horizontal and/or the vertical direction in relation to the contact plate 20. As mentioned above, there may also be a slight axial compression present at the same time in the second elastic element 40, ensuring the frictional engagement with the airbag module 10.

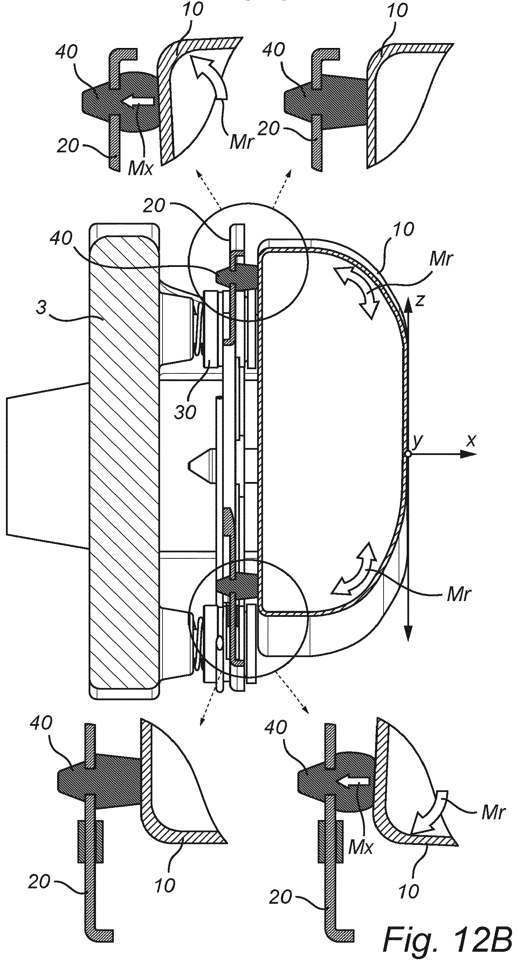

Arrows Mr in Fig. 12A designate possible rotational damping movements, at the second interface 12, of the airbag module 10 in relation to the contact plate 20. During such rotational movement Mr, the second elastic elements 40 will be subject mainly to an alternating compression/decompression as illustrated in Fig. 12B.

Whether there will be linear/translation airbag module damping movements only at the second interface 12, or rotational movements only, or a combination of both, will depend on several factors. Such factors include the nature of the problem vibrations (frequency, amplitude, frequency variations, etc.), the number of elastic elements 30 and 40 respectively, and the placement configuration thereof. With respect to movements in the x direction, since the locking spring 60 preferably is strong enough to keep the second elastic elements 40 elastically biased or compressed, the dynamic damping effect in the second interface I2 in the present embodiment is mostly or entirely restricted to movements in the y and z directions and/or rotational movements.

As mentioned above, a special advantage of the of the inventive concept is that it becomes possible to reach substantially lower tuning frequencies without any negative consequences, by using two interacting sets of elastic damper elements 30, 40, operating at two different interfaces I1, I2. As an example, experiments have shown that an assembly as the one described, but without using any damper function at the second interface, may reach a tuning frequency at around 32 Hz, while using also the second set of elastic dampers 40 with a hardness of 40 Shore A in the dynamic damping operation makes it possible to reach tuning frequencies at around 20 Hz, i.e. a frequency reduction of around 40%.

Stated in other words, the present invention makes it possible to reach a combined or overall dynamic system damping frequency which is X% lower than the lowest damping frequency reachable by the same set of first elastic dampers only and operating in the same design but without being combined with damping operation of the second set of elastic dampers in the second interface I2, wherein X may be any of least 10%, at least 20%, at least 30%, or higher.

### Alternatives

The embodiments described above and as shown in the figures may be varied in many ways.

In the illustrated embodiment, the second elastic elements are initially mechanically attached to the contact plate 20, and are in engagement with the mass 10 by frictional forces only. In alternative embodiments, a mechanical inverted solution may be used, or there may be a mechanical/chemical engagement at both ends.

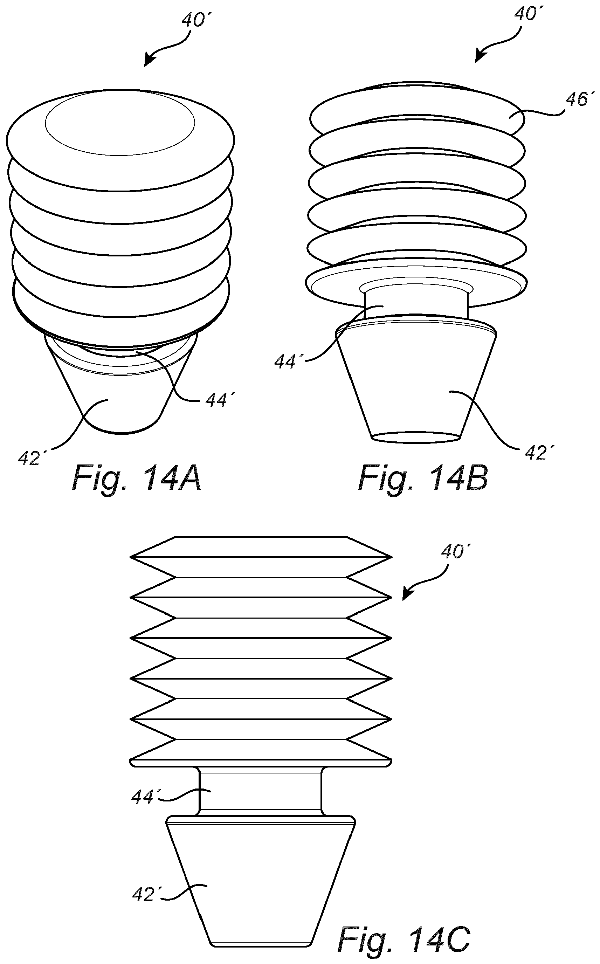

Figs 14A to C illustrate a variant of a second elastic element 40'. In this alternative, the main part of the element 40' is bellow shaped, presenting a plurality of circumferentially extending ribs or flanges 46'. The number and design of the flanges 46' constitute additional tuning parameters for varying the stiffness of the elastic element. Furthermore, both this embodiment and the previous embodiment may be varied in different ways. The element 40, 40' may be sleeve shaped with an internal bore, the size and dimension of which may constitute an additional tuning parameter. Also, the cross section of the element may be varied.

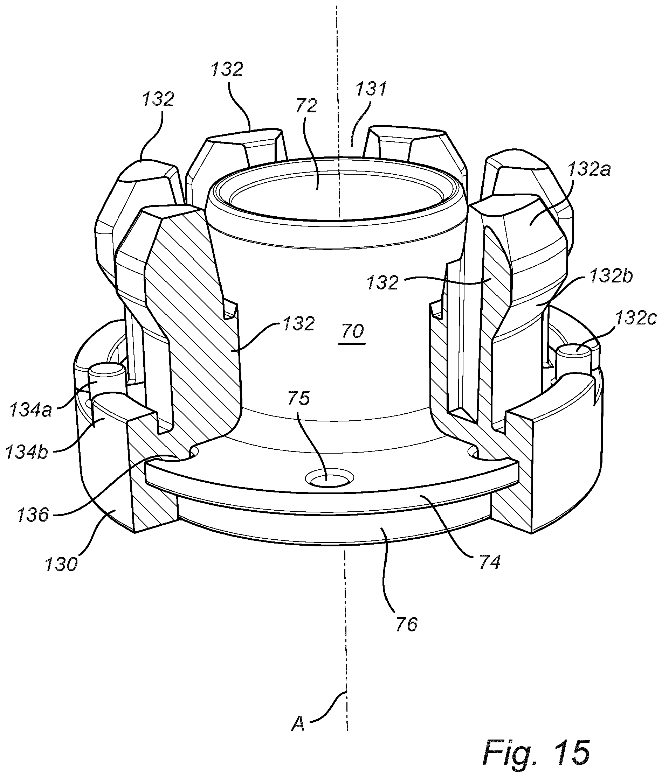

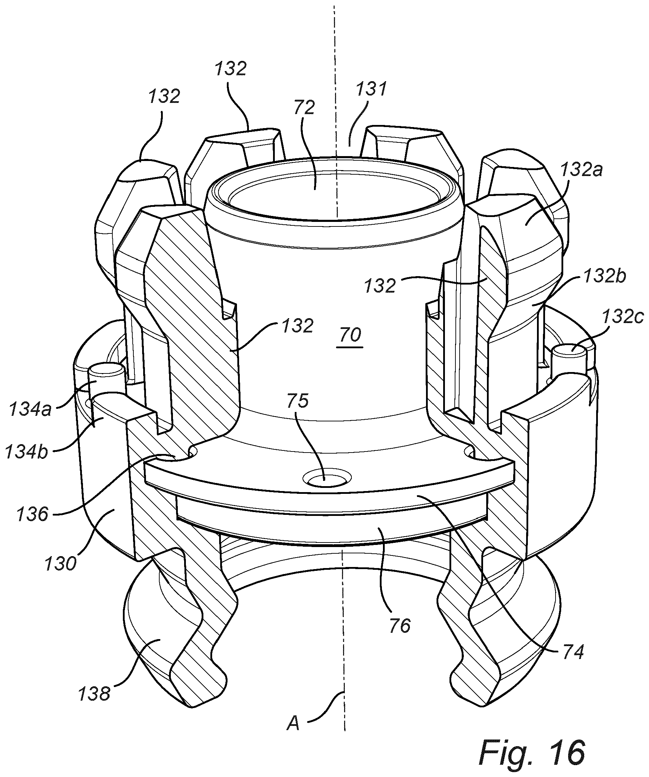

Figs 15 and 16 illustrate alternative embodiments of the first elastic elements 30. Fig 15 illustrates a ribbed first elastic element 130 presenting a number of circumferentially distributed ribs 132 separated by spaces 131. The ribs 132 extend from a rear base of the element 1232 towards the front insertion end of the element 130. As in the previous embodiment, the elastic element 130 is molded on a slider 70 made of a more rigid material. During molding, the element 130 is mechanically secured to the slider 70 by means of openings 75 formed in a flange 74 of the slider 70, wherein elastic material at 136 will lock the parts 130 and 70 together. Each rib 132 presents a radially enlarged portion at its insertion end, as in the previously described embodiment, with a leading sloped surface 132a and a trailing sloped surface 132b. The snap-locking mechanism is essentially the same, but the insertion into the openings 22 of the contact plate can be made easier thanks to the ribbed configuration. The ribbed configuration also presents additional tuning options.

The elastic element 130 is further provided with a first set of axially directed studs 134a having a first axial height, and a second set of axially directed studs 134b having a second axial height, smaller than the first axial height. The first studs 134a define an insertion stop during insertion of the elastic element 130 into the contact plate opening 22. The studs 134a also provides a de-coupling effect so that frictional engagement between the base part of element 130 and the rear side of the contact plate 20 does not disturb the damping operation. The second set of studs 134b operates during a horn activation. When the contact plate 20 is moved towards the armature 3 during horn activation, the smaller studs 134a are initially axially compressed. When they are in level with the larger, lower studs 134b, the two sets of studs 134a and 134b together provide a more rigid axial stop for the horn activation movement. The embodiment of the first elastic element 30 shown in the previous figures may also present such first studs, and optionally also such second studs.

This design and the operation and advantages of the design in Fig. 15 is fully described in applicant's WO 2019/129512 A1, the disclosure of which is hereby incorporated by reference.

Fig. 16 illustrates a variant of the design in Fig. 15 which also includes an integrated horn spring 138 molded in one piece with the elastic element 130 and which may replace the separate spring 80 in the previous embodiment. Such an integrated horn spring may also be used in non-ribbed designs of the first elastic element 30.

In the illustrated embodiments, the guide shaft 52 is part of the bolt 50 screwed into the vibrating base structure 3. The guide shaft may be implemented differently, for instance by a guide shaft made in one piece with the vibrating structure 3, and optionally with a free threaded end for securing the assembly by a nut. Also, it may in some embodiments be possible to have the bolt 50 oriented in the opposite direction, i.e. to be screwed into the horn plate instead.

In other embodiments, the outer engagement surface of the first elastic element 30, 130 may be present in some directions only if the damper unit is configured to transfer vibrations in some specific directions only. This may be implemented in various ways, such as by arranging inner protruding parts in the mounting opening of the horn plate defining circumferentially limited inner engagement surfaces, such as inner protruding parts on the sleeves. This may also be implemented by designing the elastic damper element 30, 130 with engagement surfaces in some directions only. In such embodiments where one single damper unit is arranged to transfer vibrations in specific directions only, the complete assembly may comprise a number of damper units arranged to handle vibrations in different directions.

## Claims

1. A method of frequency-tuning a vibration damper assembly for dampening vibrations in a steering wheel structure,
wherein said vibration damper assembly comprises a mass, and a contact plate having a front side facing towards the mass and a rear side arranged to face towards a vibrating surface of the steering wheel structure, said contact plate being connectable to said vibrating surface via a plurality of first elastic elements so as to be movable in relation to the vibrating surface, and
wherein said mass is supported by the contact plate;
said method comprising frequency-tuning the damper assembly to varying vibration frequencies of the vibrating surface by both varying the stiffness of the first elastic elements and varying the stiffness of a plurality of second elastic elements, said second elastic elements being arranged between and in contact with the plate and the mass so as to be elastically deformable in response to the mass moving in relation to the contact plate during a damping operation of the damper assembly.

2. The method according to claim 1, wherein said varying the stiffness of the second elastic elements comprises varying at least a shear stiffness of the second elastic elements.

3. The method according to claim 1 or 2, wherein said varying the stiffness of the second elastic elements comprises varying at least a material hardness of the second elastic elements.

4. The method according to claim 3, wherein the material hardness of the second elastic elements is selected to 60 Shore A or less.

5. The method according to claim 4, wherein the material hardness of the second elastic elements is selected to 40 Shore A or less.

6. The method according to any of the preceding claims, wherein said mass comprises an airbag module.

7. A frequency-tuned damper assembly for dampening vibrations in a steering wheel structure, said assembly comprising:
- a plurality of first elastic elements;
- a contact plate which is connectable to a vibrating surface of the steering wheel structure via the first elastic elements so as to be movable in relation to the vibrating surface;
- a mass which is supported by the contact plate so as to be movable in relation to the contact plate; and
- a plurality of second elastic elements each of which is arranged between and in contact with the plate and the mass so as to be elastically deformable in response to the mass moving in relation to the contact plate during a damping operation of the damper assembly,
wherein the mass and said first and second elastic damper elements are configured to operate in common, during a damping operation of the damper assembly, as a frequency-tuned dampened spring-mass system being frequency-tuned to vibrations of the vibrating surface.

8. The damper assembly according to claim 7, wherein the mass is connected to the contact plate via one or more connector elements which do not form part of the second elastic elements.

9. The damper assembly according to any claim 7 or 8, wherein the mass is supported by the contact plate so as to be movable in a linear and/or rotational in relation to the contact plate during a damping operation of the damper assembly.

10. The damper assembly according to any of claims 7 to 9, wherein the mass is arranged to perform at least a linear movement in relation to the plate during a damping operation of the damper assembly, and the second elastic elements are arranged to undergo a shear deformation in response to said linear movement.

11. The damper assembly according to any of claims 7 to 10, wherein the mass is arranged to perform at least a rotational movement in relation to the contact plate during a damping operation of the damper assembly, and the second elastic elements are arranged to undergo an alternating compression/decompression deformation in response to said rotational movement.

12. The damper assembly according to any of claims 7 to 11, wherein the second elastic elements comprises elastic assembly buffers which are arranged to maintain a distance between the mass and the contact plate.

13. The damper assembly according to any of claims 7 to 12, wherein at least some of the second elastic elements are mechanically connected to one of the contact plate and the mass, and are in frictional engagement with the other one of the contact plate and the mass.

14. The damper assembly according to any of claim 7 to 13, wherein said mass comprises an airbag module.

15. A method of dampening vibrations in a steering wheel structure, said comprising:
connecting a contact plate to a vibrating surface of a steering wheel structure via a plurality of first elastic elements so as to allow the contact plate to move in relation to the vibrating surface;
connecting a mass to the contact plate so as to allow the mass to move in relation to the contact plate;
arranging a plurality of second elastic elements between and in contact with the contact plate and the mass so as to be elastically deformable in response to the mass moving in relation to the contact plate during a damping operation; and
configuring the first and second elastic elements to form, together with the mass, a dampened spring-mass system being frequency-tuned to vibrations of the vibrating surface.

16. The method according to claim 15, wherein said configuring comprises selecting a stiffness of the first elastic elements and a stiffness of the second elastic elements to frequency-tune the dampened spring-mass system to said vibrations of the vibrating surface.

17. Use of elastic buffer assembly elements in a frequency-tuned vibration damper assembly,
said damper assembly comprising a plate which is connected to a vibrating surface of a steering wheel structure via a plurality of first elastic damper elements so as to be movable in relation to the vibrating surface, a mass which is supported by the plate so as to be movable in relation to the plate on an opposite front side of the plate; and elastic buffer elements provided between the plate and the mass,
as second elastic damper elements which together with the first elastic damper elements and the mass form a frequency-tuned dampened mass-spring system being frequency-tuned to vibrations of said vibrating surface.
